# EUROPEAN PATENT APPLICATION

(11) **EP 4 495 745 A1**
(43) Date of publication of application: **22.01.2025**
(21) Application number: 24184031.3
(22) Date of filing: 24.06.2024
(51) Int. Cl.: G06F 3/041, B60K 35/10, G06F 3/0488

(54) **SYSTEMS AND METHODS FOR MITIGATING USER INPUT ERRORS ON TOUCHSCREEN DISPLAYS DUE TO PERTURBANCES OF MOBILE PLATFORMS**

(30) Priority: 17.07.2023 US 202318353531
(71) Applicant: Honeywell International Inc., Charlotte, NC 28202 (US)
(72) Inventor: FINSETH, Tor, Charlotte, 28202 (US); DE MERS, Robert, Charlotte, 28202 (US); LUBOLD, Nichola, Charlotte, 28202 (US)
(74) Representative: LKGlobal UK Ltd.

(57) **Abstract**

Systems and methods are provided for mitigating user input errors due to perturbances of mobile platforms. The systems may include, one or more sensors configured to sense measurable conditions internal or external to a mobile platform, and a controller in operable communication with the sensors and with a touchscreen display. The controller may be configured to, by one or more processors: receive sensor data from the sensors, process the sensor data to detect and characterize a perturbance, receive user input data indicative of user input performed by a user via the touchscreen display, process the user input data to determine whether the user input is likely to be invalid due to the perturbance, and initiate a corrective action in response to a determination that the user input is likely to be invalid due to the perturbance.

## Description

### TECHNICAL FIELD

The present invention generally relates to touchscreen display devices of mobile platforms, and more particularly relates to systems and methods for mitigating user input errors due to a perturbance during operation of mobile platforms.

### BACKGROUND

Contemporary vehicles (e.g., automobiles, aircraft, etc.) may use built-in or mobile touchscreen display devices to display a wide range of information such as vehicle systems, navigation, entertainment, and other information used in the operation and control of the vehicle. Passengers of the vehicles are able to interact with the touchscreen display devices to access information, and input selections and commands. However, various perturbations such as changes in vehicle speed or position can make interaction with the touchscreen display devices challenging. For example, perturbations can cause a user to accidently touch the touchscreen display in a location other than intended.

Hence, there is a need for systems and methods capable of mitigating user input errors due to a perturbance during operation of vehicles. Furthermore, other desirable features and characteristics of the present invention will become apparent from the subsequent detailed description and the appended claims, taken in conjunction with the accompanying drawings and the foregoing technical field and background.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In various embodiments, a method is provided for mitigating user input errors due to a perturbance during operation of mobile platforms. The method may include, by one or more processors: receiving sensor data from a sensor system of a mobile platform, processing the sensor data to detect and characterize a perturbance of the mobile platform, receiving user input data indicative of user input performed by a user via a touchscreen display device in communication with the mobile platform, processing the user input data to determine whether the user input is likely to be invalid due to the perturbance of the mobile platform, and initiating a corrective action in response to a determination that the user input is likely to be invalid due to the perturbance, wherein the corrective action includes at least one of confirming the user input, invalidating the user input, or modifying the user input.

In various embodiments, a system is provided for mitigating user input errors due to a perturbance during operation of mobile platforms. The system may include, one or more sensors of a mobile platform configured to sense measurable conditions internal or external to the mobile platform, and a controller in operable communication with the one or more sensors and with a touchscreen display having a graphic user interface that includes selectable icons. The controller may be configured to, by one or more processors: receive sensor data from the one or more sensors, process the sensor data to detect and characterize a perturbance of the mobile platform, receive user input data indicative of a selection by a user on the touchscreen display device, process the user input data to determine whether the user input is likely to be invalid due to the perturbance of the mobile platform, and initiate a corrective action in response to a determination that the user input is likely to be invalid due to the perturbance, wherein the corrective action includes at least one of confirming the user input, invalidating the user input, or modifying the user input.

In various embodiments, a vehicle is provided that may include one or more sensors configured to sense measurable conditions internal or external to the vehicle, a controller in operable communication with the one or more sensors and with a touchscreen display having a graphic user interface that includes selectable icons. The controller may be configured to, by one or more processors: receive sensor data from the one or more sensors, process the sensor data to detect and characterize a perturbance of the vehicle, receive user input data indicative of user input performed by a user via the touchscreen display, process the user input data to determine whether the user input is likely to be invalid due to the perturbance of the vehicle, and initiate a corrective action in response to a determination that the user input is likely to be invalid due to the perturbance, wherein the corrective action includes at least one of confirming the user input, invalidating the user input, or modifying the user input.

Furthermore, other desirable features and characteristics of the system and method will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 schematically represents a mobile platform and components of an input error mitigation system thereof in accordance with an embodiment;
FIG. 2 is a dataflow diagram illustrating operation of the input error mitigation system of FIG. 1 in accordance with an embodiment;
FIG. 3 is a flowchart illustrating an exemplary method for mitigating user input errors due to a perturbance during operation of mobile platforms in accordance with an embodiment; and
FIG. 4 schematically represents a touchscreen display device and illustrates certain aspects of the method of FIG. 3 in accordance with an embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

For the sake of brevity, conventional techniques related to signal processing, data transmission, signaling, control, and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the present disclosure.

Systems and methods disclosed herein provide for mitigating user input errors due to perturbances during operation of mobile platforms. For example, a user may attempt to input a selection, command, operation, or the like via physical contact (e.g., via the user's hand, a stylus, or other similar input device) with a touchscreen display of a display device aboard a moving mobile platform. However, a perturbation of the mobile platform may cause the user's hand or input device to unintentionally move and cause the user to fail to complete the intended selection, command, or operation and/or accidentally input a different, unintended selection, command, or operation. In such examples, the systems and methods herein may detect the perturbation, determine whether the perturbation caused a user input error, and, if necessary, mitigate the error by performing a corrective action. Nonlimiting examples of corrective actions may include, but are not limited to, confirming the user's input prior to execution thereof, voiding the user's input, and/or automatically modifying the user's input to be the intended selection.

As used herein, a perturbance refers to a disturbance of motion, course, arrangement, or state of equilibrium. For example, perturbations may include changes in motion of a mobile platform due to control by a pilot, driver, operator, etc., due to environmental factors (e.g., turbulence, road conditions, etc.), due to significant changes in vibrations, and the like. As used herein, turbulence refers to an irregular motion of the air resulting from atmospheric eddies and currents which induce sudden, unexpected, and/or chaotic altitude changes, rolls, pitches, and/or yaws for a mobile platform. As used herein vibration refers to a periodic motion of particles of a body or medium in alternately opposite directions from a position of equilibrium when that equilibrium has been disturbed (e.g., an oscillation, quivering, or trembling motion). In various examples, perturbances detected by the systems and methods herein may be limited to sudden changes in position of a mobile platform. In such examples, perturbances detected by the systems and methods herein may include sudden and significant changes in vibration but may exclude constant vibration in general. In some examples, perturbances detected by the systems and methods herein may exclude vibration entirely.

The mobile platform may be any type of vehicle, such as but not limited to various types of aircraft. It should be noted that the term aircraft, as utilized herein, may include any manned object capable of flight. Examples of aircraft may include, but are not limited to, fixed-wing aerial vehicles (e.g., propeller-powered or jet powered), rotary-wing aerial vehicles (e.g., helicopters), manned aircraft, etc. Other examples of mobile platforms include, but are not limited to, automobiles, watercraft, trains, construction vehicles, recreational vehicles, and military vehicles.

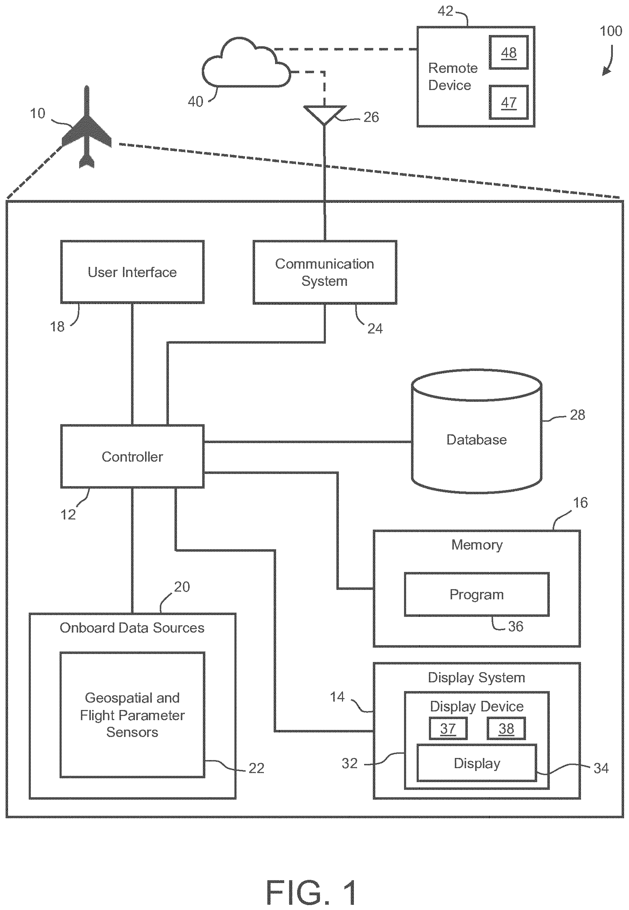

Referring now to FIG. 1, an aircraft 10, in this example an airplane, and certain systems thereof are illustrated in accordance with an exemplary and non-limiting embodiment of the present disclosure. An input error mitigation system 100 may be utilized onboard the aircraft 10 as described herein. As schematically depicted in FIG. 1, the system 100 includes and/or is functionally coupled to the following components or subsystems, each of which may assume the form of a single device or multiple interconnected devices, including, but not limited to, a controller 12 operationally coupled to: at least one display device 32, which may optionally be part of a larger on-board display system 14; computer-readable storage media or memory 16; a user interface 18; and onboard data sources 20 including, for example, an array of geospatial and flight parameter sensors 22. The system 100 may be separate from or integrated within a flight management system (FMS) and/or a flight control system (FCS). The system 100 may also contain a communication system 24 including an antenna 26, which may wirelessly transmit data to and receive data from various external sources physically and/or geographically remote to the system 100 and/or the aircraft 10.

Although schematically illustrated in FIG. 1 as a single unit, the individual elements and components of the system 100 can be implemented in a distributed manner utilizing any practical number of physically distinct and operatively interconnected pieces of hardware or equipment. When the system 100 is utilized as described herein, the various components of the system 100 will typically all be located onboard the aircraft 10.

The term "controller," as appearing herein, broadly encompasses those components utilized to carry-out or otherwise support the processing functionalities of the system 100. Accordingly, the controller 12 can encompass or may be associated with any number of individual processors, flight control computers, navigational equipment pieces, computer-readable memories (including or in addition to the memory 16), power supplies, storage devices, interface cards, and other standardized components.

In various embodiments, the controller 12 includes at least one processor, a communication bus, and a computer readable storage device or media. The processor performs the computation and control functions of the controller 12. The processor can be any custom made or commercially available processor, a central processing unit (CPU), a graphics processing unit (GPU), an auxiliary processor among several processors associated with the controller 12, a semiconductor-based microprocessor (in the form of a microchip or chip set), any combination thereof, or generally any device for executing instructions. The computer readable storage device or media may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable instructions, used by the controller 12. The bus serves to transmit programs, data, status and other information or signals between the various components of the aircraft 10. The bus can be any suitable physical or logical means of connecting computer systems and components. This includes, but is not limited to, direct hard-wired connections, fiber optics, infrared, and wireless bus technologies.

The instructions may include one or more separate programs, each of which comprises an ordered listing of executable instructions for implementing logical functions. The instructions, when executed by the processor, receive and process signals from the sensors 22, perform logic, calculations, methods and/or algorithms, and generate data based on the logic, calculations, methods, and/or algorithms. Although only one controller 12 is shown in FIG. 1, embodiments of the aircraft 10 can include any number of controllers 12 that communicate over any suitable communication medium or a combination of communication mediums and that cooperate to process the sensor signals, perform logic, calculations, methods, and/or algorithms, and generate data. In various embodiments, the controller 12 includes or cooperates with at least one firmware and software program (generally, computer-readable instructions that embody an algorithm) for carrying-out the various process tasks, calculations, and control/display functions described herein. During operation, the controller 12 may be programmed with and execute at least one firmware or software program, for example, a program 36, that embodies one or more algorithms, to thereby perform the various process steps, tasks, calculations, and control/display functions described herein.

The controller 12 may exchange data with one or more external sources to support operation of the system 100 in various embodiments. In this case, bidirectional wireless data exchange may occur via the communication system 24 over a communications network 40, such as a public or private network implemented in accordance with Transmission Control Protocol/Internet Protocol architectures or other conventional protocol standards (e.g., Bluetooth^{™}). Encryption and mutual authentication techniques may be applied, as appropriate, to ensure data security.

In various embodiments, the communication system 24 is configured to support instantaneous (i.e., real time or current) communications between on-board systems, the controller 12, and the one or more external sources. The communication system 24 may incorporate one or more transmitters, receivers, and the supporting communications hardware and software required for components of the system 100 to communicate as described herein. In various embodiments, the communication system 24 may have additional communications not directly relied upon herein, such as bidirectional pilot-to-ATC (air traffic control) communications via a datalink, and any other suitable radio communication system that supports communications between the aircraft 10 and various external source(s).

The memory 16 can encompass any number and type of storage media suitable for storing computer-readable code or instructions, such as the program 36, as well as other data generally supporting the operation of the system 100. As can be appreciated, the memory 16 may be part of the controller 12, separate from the controller 12, or part of the controller 12 and part of a separate system. The memory 16 can be any suitable type of storage apparatus, including various different types of direct access storage and/or other memory devices.

A source of information suitable for operating one or more systems of the aircraft 10 may be part of the system 100. In certain embodiments, the source is one or more databases 28 employed to receive and store input error mitigation data, which may be updated on a periodic or iterative basis to ensure data timeliness. In various embodiments, the input error mitigation data may include various instructions configured to detect, quantify, and otherwise characterize sensor data, for example, received from the sensors 22, to detect and characterize perturbances, and may include instructions, criteria, and/or thresholds for various corrective actions that may be performed based on the detected perturbances. The input error mitigation data may be stored in the memory 16 or in the one or more databases 28, and referenced by the program 36. In various embodiments, these databases 28 may be available online and accessible remotely by a suitable wireless communication system, such as the communication system 24.

The sensors 22 supply various types of data and/or measurements to the controller 12. In various embodiments, the sensors 22 supply, without limitation, one or more of: inertial reference system measurements providing a location, Flight Path Angle (FPA) measurements, airspeed data, groundspeed data, vertical speed data, vertical acceleration data, altitude data, attitude data including pitch and roll measurements, yaw data, data related to ownship weight, time/date information, heading information, data related to atmospheric conditions, flight path data, flight track data, radar altitude data, geometric altitude data, wind speed and direction data. Further, in certain embodiments of the system 100, the controller 12, and the other components of the system 100 may be included within or cooperate with any number and type of systems commonly deployed onboard aircraft including, for example, an FMS, an Attitude Heading Reference System (AHRS), an Instrument Landing System (ILS), and/or an Inertial Reference System (IRS). In various embodiments, the sensors 22 may include a vertical accelerometer, a longitudinal accelerometer, a toroidal accelerometer, a vibration indicator, or combinations thereof.

With continued reference to FIG. 1, the display device 32 can include any number and type of image generating devices on which one or more avionic displays 34 may be produced. In various embodiments, the display device 32 may be affixed to the static structure of the aircraft 10 cockpit as, for example, a Head Down Display (HDD). Alternatively, the display device 32 may assume the form of a movable display device (e.g., a pilot-worn display device) or a portable display device, such as an Electronic Flight Bag (EFB), a laptop, or a tablet computer carried into the aircraft 10 cockpit by a pilot, a smartphone, a smart watch, etc.

At least one avionic display 34 is generated on display device 32 during operation of the system 100. The term "avionic display" as used herein is synonymous with the terms "aircraft-related display" and "cockpit display" and encompasses displays generated in textual, graphical, cartographical, and other formats. The system 100 can generate various types of lateral and vertical avionic displays 34 on which symbology, text annunciations, and other graphics pertaining to flight planning are presented for a pilot to view. The display device 32 is configured to continuously render at least one avionic display 34. The avionic display 34 generated and controlled by the system 100 can include alphanumerical input displays of the type commonly presented on the screens of multi-function control and display units (MCDUs), as well as Control Display Units (CDUs) generally. Specifically, certain embodiments of the avionic displays 34 include one or more two dimensional (2D) avionic displays, such as a horizontal (i.e., lateral) navigation display or vertical navigation display; and/or on one or more three dimensional (3D) avionic displays, such as a Primary Flight Display (PFD) or an exocentric 3D avionic display.

In various embodiments, a human-machine interface, such as a touchscreen display, is implemented as an integration of the user interface 18 and the display device 32. Via various display and graphics systems processes, the controller 12 may command and control the touchscreen display generating a variety of graphical user interface (GUI) objects or elements, for example, buttons, sliders, and the like, which are used to prompt a user to interact with the human-machine interface to provide user input, and to activate respective functions and provide user feedback, responsive to received user input at the GUI element. In such embodiments, the display device 32 may include a touch sensor 37 and/or a touch sensing system configured to sense the user input (e.g., contact between a screen of the display device 32 and a user's finger or a stylus).

In various embodiments, the communication system 24 may be configured to communicate via a wired connection or wirelessly with one or more remote devices, such as a remote device 42 represented in FIG. 1, through the communications network 40. In some embodiments, the remote device 42 may include a display system that includes a display device configured to generate a touchscreen display, for example, as previously described in relation to the display 34 of the display device 32. In various embodiments, the remote device 42 may assume the form of a movable display device (e.g., a pilot-worn display device) or a portable display device, such as a laptop or a tablet computer, a smartphone, a smart watch, etc. In such embodiments, the remote device 42 may include a touch sensor 47 and/or a touch sensing system configured to sense the user input (e.g., contact between a screen of the remote device 42 and a user's finger or a stylus).

In various embodiments, the display device 32 and/or the remote device 42 may include orientation sensors 38 and 48, respectively. The orientation sensors 38 and 48 may be configured to sense an orientation of the respective display device 32 or 42 relative to a reference frame (e.g., a stationary three dimensional Cartesian coordinate system). The orientation sensors 38 and 48 may include various types of sensors or combinations of sensors.

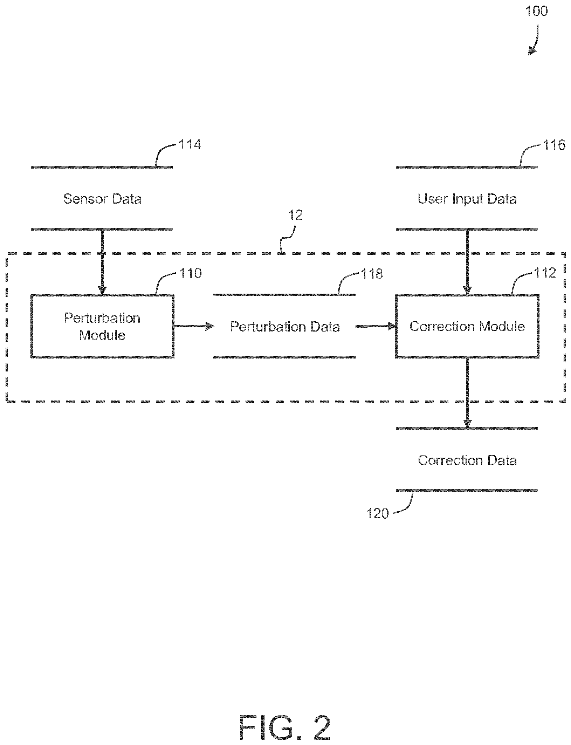

With reference to FIG. 2 and with continued reference to FIG. 1, a dataflow diagram illustrates elements of the system 100 of FIG. 1 in accordance with various embodiments. As can be appreciated, various embodiments of the system 100 according to the present disclosure may include any number of modules embedded within the controller 12 which may be combined and/or further partitioned to similarly implement systems and methods described herein. Furthermore, inputs to the system 100 may be received from other control modules (not shown) associated with the aircraft 10, and/or determined/modeled by other sub-modules (not shown) within the controller 12. Furthermore, the inputs might also be subjected to preprocessing, such as sub-sampling, noise-reduction, normalization, feature-extraction, missing data reduction, and the like. In various embodiments, the system 100 includes a perturbation module 110 and a correction module 112.

In various embodiments, the perturbation module 110 receives as input sensor data 114 generated by the sensors 22. The sensor data 114 includes various data indicating sensed measurable conditions internal and/or external to the aircraft 10 such as, but not limited to, altitude, speed, roll, pitch, and yaw measurements. The perturbation module 110 processes the sensor data 114, detects perturbances, and determines characteristics of detected perturbances such as magnitude, direction, and timing thereof. The perturbation module 110 generates perturbance data 118 that includes various data indicating the determined characteristics of the detected perturbances.

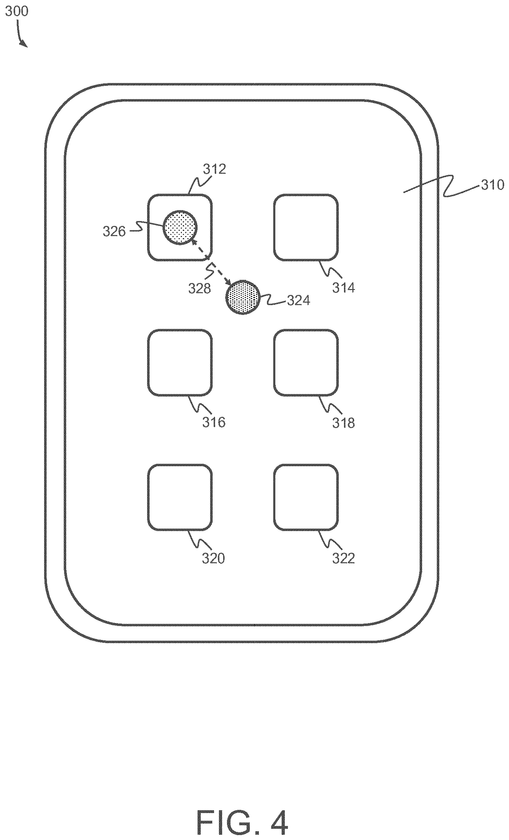

In various embodiments, the correction module 112 receives as input the perturbance data 118 generated by the perturbation module 110. The correction module 112 also receives as input user input data 116 generated by the user interface 18 (e.g., in response to an interaction by a user with a GUI of a touchscreen display). The user input data 116 includes various data indicating user input (e.g., one or more selections, operations, or commands input by the user). The correction module 112 processes the perturbance data 118 and the user input data 116 to determine a likelihood that the detected perturbance affected the user input to an extent sufficient such that the user input is invalid. For example, FIG. 4 presents an exemplary display device 300 that includes a touchscreen display 310 having a GUI rendered thereon that includes selectable icons 312, 314, 316, 318, 320, and 322. In this nonlimiting example, a user may interact with the display device 300 while traveling in a mobile platform, such as the aircraft 10. While attempting to select the icon 312, a perturbance may cause the user's hand or input device to unintentionally move causing the user to accidentally contact (e.g., physically touch) the touchscreen display 310 at a first location 324. Upon processing the perturbance data 118 and the user input data 116, the correction module 112 may determine that the perturbance significantly affected the user input. For example, the correction module 112 may compare the characteristics of the perturbance with perturbance characteristic criteria (e.g., minimum magnitude, direction, etc.), and/or may compare a difference in the timing of the perturbance and the user input with the touchscreen display with a perturbance timing criteria (e.g., within 0.5 seconds). In some embodiments, the correction module 112 may determine that the user input is likely to be invalid in response to an analysis of the perturbance data 118 and/or the user input data 116 indicating that the preprogrammed perturbance characteristics criteria and/or the perturbance timing criteria are met.

The correction module 112 may determine an offset of the location of the actual contact of the user with a location of an intended contact. For example, in FIG. 4 the correction module 112 may determine that the actual contact at the first location 324 was offset by a vectored delta 328, and thereby determine that the intended location of contact was at a second location 326. Various methods may be used by the correction module 112 to determine the offset and/or vectored delta such as, but not limited to, various machine learning techniques, touch location frequency, display contextual information, previous touch activity, and user-specific touch patterns.

In some embodiments, the correction module 112 may consider an expected motion of the user's hand and/or arm based on the reach required to contact the touchscreen display. For example, a perturbance may affect user input to a lesser extent when a user is interacting with a first touchscreen display that is close to the user. In contrast, the same perturbance may affect user input to a greater extent when the user is interacting with a second touchscreen that is further from the user. Various methods may be used to perform such consideration. In some embodiments, the correction module 112 may model motion based on an expected reach from a predetermined user position, such as a specific standing position or a specific seat of the aircraft 10 to a known physical location of the touchscreen display. In other embodiments, the position of the user may be sensed by one or more sensors (e.g., the sensors 22). In other embodiments, the motion of the user's hand and/or arm may be sensed with one or more sensors (e.g., the sensors 22). In various embodiments, one or more sensors (e.g., the sensors 22) may be used to sense whether the user is stabilizing their hand and/or arm at the moment of contact with the touchscreen display (e.g., resting palm on the display device, detecting the presence of fingers wrapped around an edge of the display device, etc.). In such embodiments, the correction module 112 may reduce the likelihood that the user input data 116 is invalid due to the perturbance since the perturbance would be expected to be at least partially mitigated by the stabilization.

In various embodiments, the correction module 112 may consider an orientation of the touchscreen display. For example, if a perturbance includes a drop in altitude (e.g., -z direction), the perturbance may significantly affect a user contact with a touchscreen display that is oriented at, for example, a forty-five degree angle by causing the user to contact the touchscreen at a location that is lower than intended. However, the same drop in altitude may have little or no effect on a user contact with a touchscreen display that is oriented horizontally since the direction of the user's motion is in the same direction as the perturbance. However, the drop in altitude may affect the user contact by causing an erroneous double-tap rather than a single-tap, or early lift-off during a dragging operation. In various embodiments, orientation of the touchscreen display may be determined by an orientation sensor of the display device generating the touchscreen display (e.g., the orientation sensors 38 or 48).

In response to a determination that the perturbance significantly affected the user input data 116, the correction module 112 may generate correction data 120 that includes various data configured to initiate one or more corrective actions. Various corrective actions may be initiated by the correction module 112. In various examples, the corrective action may include generating a visual prompt on the display (e.g., the display 34 of the display device 32, the display of the remote device 42, and/or the touchscreen display 310) that requests confirmation of the user input. In various examples, the corrective action may include invalidating the user input. In various examples wherein the user input is not related to safety critical operations, the corrective action may include modifying, the user input based on the perturbation and preprogramed criteria. For example, the corrective action may include adjusting the user input from an actual contact location (e.g., the first location 324) to an intended contact location (e.g., the second location 326). In such examples, the corrective action may modify the user input based on, at least in part, a magnitude of the perturbation, a frequency of the perturbation, a timing of the perturbation relative to the user input, an orientation of the touchscreen display, and/or a direction of the perturbation. In various embodiments, the corrective action may be configured to mitigate the user input error (e.g., automatically changing the actual contact location to an intended contact location) without changing the GUI.

In various embodiments, the correction module 112 may determine that an operation or command intended by the user was interrupted. The correction module 112 may process the user input data 116 to determine that the user input is a first type of operation or command, determine that the user intended a second type of operation or command based on the perturbation, and then change the user input from the first type of operation or command to the second type of operation or command.

In some embodiments, the correction module 112 may determine, based on an analysis of the perturbance data 118 and the user input data 116, that the perturbance caused more contact between the user and the touchscreen display then was intended by the user. For example, the user may have intended to input a selection of a selectable icon by executing a single-tap on the touchscreen display; however, due to an unexpected perturbation, the user may have input a double-tap or a swipe gesture which may result in an erroneous selection or no selection being completed. In such embodiments, the correction module 112 may change the double-tap or the swipe gesture to a single-tap resulting in the completion of the intended selection.

In some embodiments, the correction module 112 may determine, based on an analysis of the perturbance data 118 and the user input data 116, that the perturbation caused less contact between the user and the touchscreen display then was intended by the user. For example, the user may have intended to execute a dragging operation wherein the user slid a finger across the touchscreen display to, for example, changing a position of a screen graphic rendered on the touchscreen display; however, due to an unexpected perturbation, the user may have momentarily lost contact with the touchscreen display during the dragging operation such that the user input data 116 includes one, two, or more partial dragging operations. In such embodiments, the correction module 112 may complete or combine the partial dragging operations to generate a continuous, uninterrupted dragging operation as intended.

The correction module 112 may transmit the correction data 120 to other systems of the aircraft 10, for example, to communicate with the user, execute the user input, and/or modify the user input.

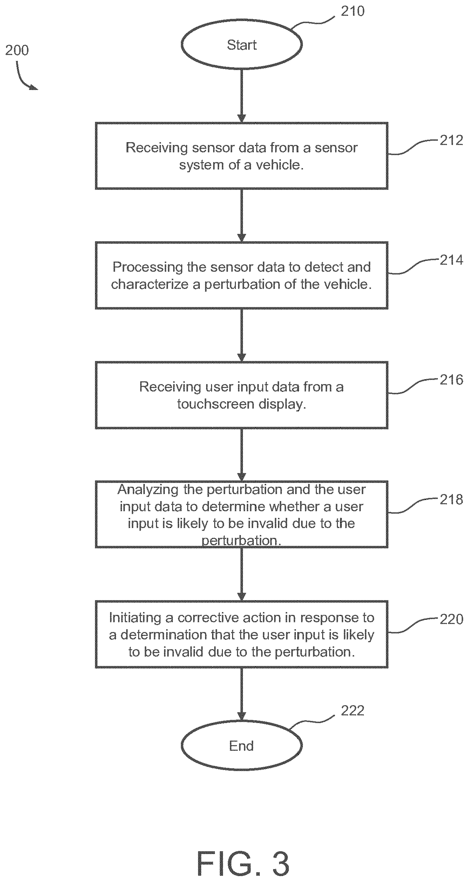

The systems disclosed herein, including the system 100, provide for methods of mitigating user input errors due to a perturbance during operation of mobile platforms. For example, FIG. 3 is a flowchart illustrating an exemplary method 200. As can be appreciated in light of the disclosure, the order of operation within the method 200 is not limited to the sequential execution as illustrated in FIG. 3, but may be performed in one or more varying orders as applicable and in accordance with the present disclosure. The method 200 may start at 210. In various embodiments, the method 200 can be scheduled to run based on one or more predetermined events, and/or can run continuously during operation of the mobile platform.

At 212, the method 200 may include receiving, by one or more processors (e.g., associated with the controller 12), sensor data from a sensor system of a mobile platform (e.g., the sensors 22 of the aircraft 10). At 214, the method 200 may include processing, by the one or more processors, the sensor data to detect and characterize a perturbation of the mobile platform.

At 216, the method 200 may include receiving, by the one or more processors, user input data indicative of user input by a user on a touchscreen display (e.g., the display device 32 or the remote device 42) in communication with the vehicle. In some examples, the sensor system of the vehicle is external to the display device generating the touchscreen display.

At 218, the method 200 may include analyzing, by the one or more processors, the perturbation and the user input data to determine whether the user input is likely to be invalid due to the perturbation of the vehicle.

At 220, the method 200 may include initiating, by the one or more processors, a corrective action in response to a determination that the user input is likely to be invalid due to the perturbation.

The method 200 may end at 222.

The systems and methods disclosed herein provide various benefits over certain existing systems and methods. For example, perturbations of a mobile platform during use of a touchscreen display may result in a user accidentally inputting an unintended selection, operation, and/or command, failing to input a selection, operation, and/or command, or failing to complete a selection, operation, and/or command. The systems and methods disclosed herein detect perturbations and initiate corrective actions to validate and/or modify user input such that selections and/or commands are executed and/or completed as intended. As such, the systems and methods disclosed herein effectuate an improvement in the technical field of touchscreen displays of mobile platforms.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "substantially" denotes within 5% to account for manufacturing tolerances. Also, as used herein, the term "about" denotes within 5% to account for manufacturing tolerances.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method, comprising:
receiving, by one or more processors, sensor data from a sensor system of a mobile platform;
processing, by the one or more processors, the sensor data to detect and characterize a perturbance of the mobile platform;
receiving, by the one or more processors, user input data indicative of user input provided by a user via a touchscreen display in communication with the mobile platform;
analyzing, by the one or more processors, the perturbance and the user input to determine whether the user input is likely to be invalid due to the perturbance of the mobile platform; and
initiating, by the one or more processors, a corrective action in response to a determination that the user input is likely to be invalid due to the perturbance, wherein the corrective action includes at least one of confirming the user input, invalidating the user input, or modifying the user input.

2. The method of claim 1, wherein performing the corrective action includes generating, by the one or more processors, a visual prompt on the touchscreen display that requests confirmation of the user input.

3. The method of claim 1, wherein performing the corrective action includes modifying, by the one or more processors, the user input based on the perturbance and programed criteria, wherein modifying the user input is based on, at least in part, a magnitude of the perturbance, a frequency of the perturbance, a timing of the perturbance relative to the user input, an orientation of the touchscreen display, and/or a direction of the perturbance.

4. The method of claim 1, wherein performing the corrective action includes modifying, by the one or more processors, the user input based on the perturbance and programed criteria, wherein modifying the user input includes:
processing, by the one or more processors, the user input data to determine an actual location of contact on the touchscreen display;
determining, by the one or more processors, an intended location of contact on the touchscreen display based on the perturbance; and
adjusting, by the one or more processors, the user input from the actual location of contact to the intended location of contact.

5. The method of claim 1, wherein performing the corrective action includes modifying, by the one or more processors, the user input based on the perturbance and programed criteria, wherein the programed criteria is configured to consider a reach distance between a physical location of the touchscreen display and the user.

6. The method of claim 1, further comprising:
processing, by the one or more processors, the user input data to determine that the user input includes a first type of operation or command;
determining, by the one or more processors, that the user intended a second type of operation or command based on the perturbance; and
changing, by the one or more processors, the user input from the first type of operation or command to the second type of operation or command.

7. The method of claim 1, further comprising
processing, by the one or more processors, the user input data to determine that the user input includes a swipe operation or command or a double-tap operation or command;
determining, by the one or more processors, that the user intended a single-tap operation or command based on the perturbance; and
changing, by the one or more processors, the user input from the swipe operation or command or the double-tap operation or command to the single-tap operation or command.

8. The method of claim 1, further comprising:
determining, by the one or more processors, that the user input includes a first dragging operation wherein the user performed a sliding contact across the touchscreen display;
receiving, by the one or more processors, additional user input data subsequent to receiving the user input data that is indicative of a second dragging operation;
determining, by the one or more processors, that an unintended interruption occurred between receiving the user input data and receiving the additional user input data based on the perturbance; and
combining, by the one or more processors, the user input data and the additional user input data to generate a continuous, uninterrupted dragging operation.

9. A system, comprising:
one or more sensors of a mobile platform configured to sense measurable conditions internal or external to the mobile platform; and
a controller in operable communication with the one or more sensors and with a touchscreen display having a graphic user interface that includes selectable icons, the controller configured to, by one or more processors:
receive sensor data from the one or more sensors;
process the sensor data to detect and characterize a perturbance of the mobile platform;
receive user input data indicative of user input provided by a user via the touchscreen display;
analyze the perturbance and the user input to determine whether the user input is likely to be invalid due to the perturbance of the mobile platform; and
initiate a corrective action in response to a determination that the user input is likely to be invalid due to the perturbance, wherein the corrective action includes at least one of confirming the user input, invalidating the user input, or modifying the user input.

10. The system of claim 9, wherein the controller is configured, by the one or more processors, to modify the user input based on the perturbance and programed criteria, wherein the controller is configured to, by the one or more processors, modify the user input based on, at least in part, a magnitude of the perturbance, a frequency of the perturbance, a timing of the perturbance relative to the user input, an orientation of the touchscreen display, and/or a direction of the perturbance.

11. The system of claim 9, wherein the controller is configured, by the one or more processors, to modify the user input based on the perturbance and programed criteria, wherein the controller is configured to, by the one or more processors, modify the user input by:
processing the user input data to determine an actual location of contact on the touchscreen display;
determining an intended location of contact on the touchscreen display based on the perturbance; and
adjusting the user input from the actual location of contact to the intended location of contact.

12. The system of claim 9, wherein the controller is configured, by the one or more processors, to modify the user input based on the perturbance and programed criteria, wherein the programed criteria is configured to consider a reach distance between a physical location of the touchscreen display relative and the user.

13. The system of claim 9, wherein the controller is configured to, by the one or more processors:
determine that the user input includes a first type of operation or command;
determine that the user intended a second type of operation or command based on the perturbance; and
change the user input from the first type of operation or command to the second type of operation or command.

14. The system of claim 9, wherein the controller is configured to, by the one or more processors:
determine that the user input includes a swipe operation or command or a double-tap operation or command;
determine that the user intended a single-tap operation or command based on the perturbance; and
change the user input from the swipe operation or command or the double-tap operation or command to the single-tap operation or command.

15. The system of claim 9, wherein the controller is configured to, by the one or more processors:
process the user input data to determine that the user input includes a first dragging operation or command wherein the user performed a sliding contact across the touchscreen display;
receive additional user input data subsequent to receiving the user input data indicative of a second dragging operation or command;
determine that an unintended interruption occurred between receiving the user input data and receiving the additional user input data based on the perturbance; and
combine the user input data and the additional user input data to generate a continuous, uninterrupted dragging operation.
